# EUROPEAN PATENT APPLICATION

(11) **EP 1 784 032 A1**
(43) Date of publication of application: **09.05.2007**
(21) Application number: 05300891.8
(22) Date of filing: 04.11.2005
(51) Int. Cl.: H04Q 7/36, H04B 7/06, H04B 7/08, H04Q 7/38

(54) **Method for performing user allocation in SDMA systems, and corresponding base station**

(71) Applicant: Alcatel Lucent, 75008 Paris (FR)
(72) Inventor: WILD, Thorsten, 70499, Stuttgart (DE); HOEK, Cornelis, 71732, Tamm (DE)
(74) Representative: Wetzel, Emmanuelle

(57) **Abstract**

The present invention relates to a method for determining a set of users able to hae scheduled on an identical basic resource unit in a base station of a SDMA capable multiple access radio communication system.

According to the present invention, the method comprises the steps of:
- Attributing to each user a scheduling criterion value,
- Selecting the user having the highest scheduling criterion value,
- Checking for additional users spatially separable from said selected user,
- Selecting the user having the highest scheduling criterion value among said additional users.

## Description

### BACKGROUND OF THE INVENTION

The present invention relates to a method for performing user allocation in SDMA (Space Division Multiple Access) systems.

SDMA is a multiple access technique based on the spatial separation of users, enabling it to reuse the same frequency and the same time slot for two or more users under the condition that they are seen in different directions from the base station and under the condition that the base station has multiple transmit antennas (or antenna array) for performing beamforming.

The appropriate selection of the users is a crucial point for throughput optimisation.

Document "Adaptive Resource Allocation in SDMA-based Wireless Broadband Networks with OFDM Signaling" I. Koutsopoulos and L. Tassiulas, in Proc. of IEEE INFOCOM, June 2002 described a solution for performing user allocation in a SDMA based system with high computational load.

In prior art beamforming and scheduling are two separate procedures which are handled in separate communication layers or function blocks independently of each other.

A particular object of the present invention is improve the user allocation on SDMA system resources.

Another object of the invention is to provide a corresponding base station.

### SUMMARY OF THE INVENTION

These objects, and others that appear below, are achieved by a method for determining a set of users able to be scheduled on an identical basic resource unit in base station of a SDMA capable multiple access radio communication system according to claim 1, and a base station according to claim 9.

The aim of the present invention is to enable space-division multiple access (SDMA) together with adaptive beamforming. For this purpose, it is expected to re-use the same time/frequency resources for different mobile thanks to spatial separation which can be exploited by a proper design of the antenna weights in the downlink. For this purpose, the invention selects a set of proper users which can be separated spatially for one timefrequency resource element (or one code in case of a CDMA system), considering also the scheduling requirements of the different users. According to the present invention, a joint resource allocation and scheduling is performed taking into account a scheduling criterion as well as a spatial separation criterion for all users to be scheduled on the resources.

The selection algorithm starts with the user having the highest scheduling criterion then users spatially separable from him are looked for. Among the remaining users the user with the second highest scheduling criterion is selected and so on until no more spatially separable users are available or until the maximum number of antennas is reached.

Optionally, when the users for simultaneous transmission are selected, the transmitter can use additional interference suppression for attaining higher data rate. For this purpose, the baseband transmit antenna weights are optimised individually by using adaptive beamforming in the SDMA system.

The method according to the present invention presents the advantage to increase the cell throughput in the network taking advantage of the fact that this invention jointly performs resource allocation and scheduling. This heuristic iterative approach allows further for low computational complexity.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows block diagram illustrating the processing steps of the method according to the present invention;
- Figure 2 details the functional block "selection of transmitting users" of figure 1.

### DETAILED DESCRIPTION OF THE INVENTION

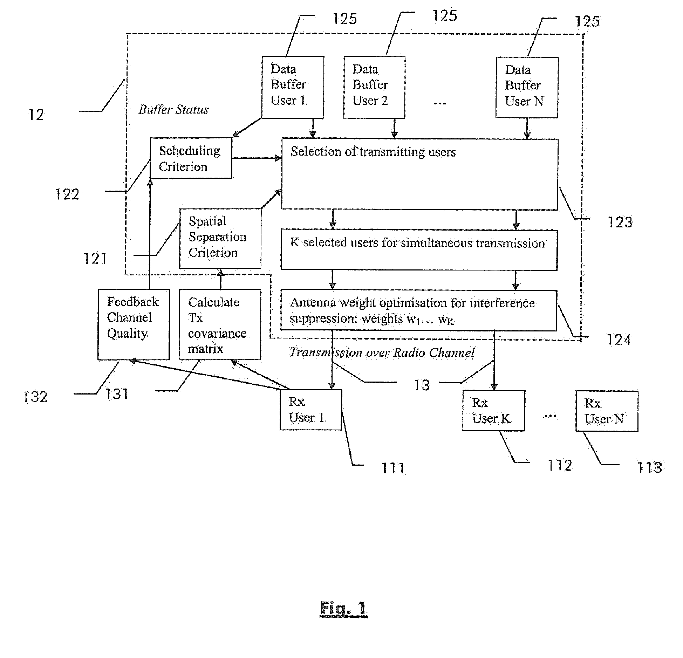

Figure 1 shows block diagram illustrating the processing steps of the method according to the present invention.

Figure 1 comprises terminals 111, 112, 113 associated to users as well as a base station 12. Terminals 111, 112, 113 are communicating with base station 12 over a radio channel 13. It will be clear for a person skilled in the art that the invention is to be understood for a plurality N of terminals.

According to the present invention, the method allocates basic resource units of multiple access scheme to K users out of N. Such a basic resource unit may be a timeslot of a TDMA system or a resource block of in an OFDMA system, the resource block consisting in one or several OFDM symbols in one or several subcarriers.

Base station 12 comprises a spatial separation criterion calculation module 121 and a scheduling criterion calculation module 122, a selection module 123, an antenna weight optimization module 124 as well as data buffer 125 related to the different users 11, 112, 113. Base station comprises further multiple transmit antennas or an antenna array. Base station 12 can be a base station of a cellular 3G communication network. Alternatively base station 12 can be an access point of a WIMAX or 4G system.

According to the present invention, the method comprises the steps of attributing to each users a scheduling criterion value in module 122, selecting the user having the highest scheduling criterion value in module 123, checking for additional users spatially separable from said selected user in module 121 and selecting the user having the highest scheduling criterion value among the additional users in module 123. This steps are repeated in a loop until no more additional users can be spatially separated from the already selected users.

Preferably, terminals 111, 112, 113 send over the uplink feedback channel information 131 related to the transmit covariance matrix and information 132 related to the channel quality to base station 12 in order for base station 12 to have all relevant information for determining a scheduling criterion and a spatial separation criterion for all users 111,...,113.

Antenna weight optimization module 124 is optional. It is preferably used to suppress mutual interference between the simultaneously scheduled users.

Following the resource allocation process, a composite downlink signal consisting in a sum of complex weighted user signals of all simultaneously scheduled users is transmitted in the downlink to selected terminals.

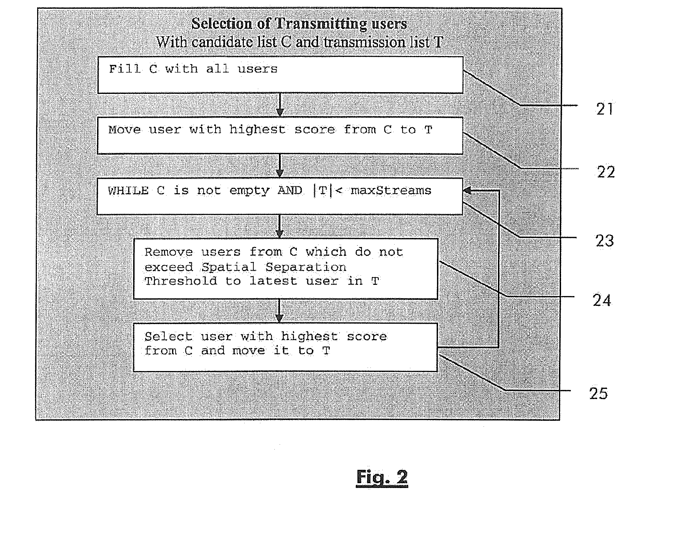

Figure 2 details the functional block "selection of transmitting users" of figure 1.

Step 21 consists in initializing the selection algorithm by filling in a candidate list C with all users 111, 112, 113 and by emptying the transmission list T.

Step 22 consists in moving the user having the highest scheduling criterion from candidate list C to transmission list T.

Step 23 consists in repeating steps 24 and 25 until candidate list is empty or until the maximum number of spatial streams is reached. Preferably, the maximum number of streams is M in case M transmit antennas are available at base station 12.

Step 24 consists in removing from the candidate lists C all users showing a spatial separation criterion with the latest selected user in T lower than a predefined threshold.

Step 25 consists in moving from candidate list C to transmission list T the user showing the highest spatial separation criterion.

At the end of this process the transmission list T contains all spatially separable users which will be scheduled in the downlink simultaneously in time and on the same frequency (or in case of CDMA: using the same code). The spatial separation is guaranteed by the antenna weights used by the base station for transmitted the buffered data to the different selected users.

Coming back to figure 1, preferred implementations of the scheduling criterion calculation module 122 and of the spatial separation criterion calculation module 121 will be explained in the following. It will be understood that these implementations can be replaced by other implementations well known by persons skilled in the art without departing from the scope of the present invention.

In a preferred embodiment, the scheduling criterion calculation module 122 uses feedback channel quality indication 132 sent from the different users 111, 112, 113 for determining the user which experience the best transmission conditions, this user being selected as first user to enter the transmission list T. The channel quality indication are preferably measured at the terminals 111, 112, 113 and sent in a signaling channel to base station 12. In this simple case aiming at maximizing cell throughput and neglecting other aspects, the channel quality can be embodied by ||**h**ᵤ|| (hᵤ being the column vector of the complex channel coefficients of the M transmit antennas) or a fed back estimated SINR value of the mobile receiver can be used. Alternatively, a priority score is calculated for each user, this priority score which can be based on buffer status, channel quality and fairness constraints.

In a preferred embodiment, spatial separation criterion calculation module 121 uses the transmit covariance matrix 131 for detecting the spatial separation between the different users. The transmit covariance matrix 131 can in a first embodiment be calculated at the terminals 111, 112, 113 from the available downlink channel estimation and sent to base station 12 over an uplink feedback signaling channel.

Alternatively and preferably in TDD (Time Division Duplex) systems base station 12 can autonomously calculate the transmit covariance matrix for the different users using the TDD property of channel reciprocity.

In a preferred embodiment, an in case of a flat fading channel, zero mean (digital downconversion), M transmit antennas at base station 12 and single receiving antenna at terminals 111, 112, 113, the transmit covariance matrix **R***ᵤ* for user u can be calculated by **R***ᵤ* = **E**{**h***ᵤ***h***ᵤ*^{H}}, with h*ᵤ* being the column vector of the complex channel coefficients of the *M* transmit antennas **h***ᵤ* = [ *h*_{*u,*1}, h_{*u*,2}, ... *h_{u,M}*]^{T}, with **h***ᵤ*^{H} being the transposed complex conjugate of **h***ᵤ.* The expectation operation is done for a time interval large enough to average out the fast fading and short enough to have approximately constant directions of departure.

**R***ᵤ* can be calculated at the mobile station and fed back to the base station via uplink signalling. In the case of a TDD system, **R***ᵤ* can be directly calculated at base station 12 by estimating h and using the channel reciprocity property.

In a preferred embodiment a spatial separation criterion can consist in, first, calculating the principal beam component for each user *u,* the eigenvector **v**_{u,Max} corresponding to the largest eigenvalue of Rᵤ. For deciding on the spatial separability of user 111 and 112, the scalar product **v**_{111,Max} • **v**_{112,Max}^{*} of their principal components is calculated (with * denoting the complex conjugation). A result of 0 means full orthogonality, 1 means full similarity of the spatial properties (no separation possible). A practical criterion for deciding on spatial separability of two users is to check whether this product stays below a predefined threshold. This threshold has to be determined by simulation, depending on modulation order and code rate. A possible threshold value is 0.18.

It will be understood by person skilled in the art that other options to check for spatial separability are possible without departing from the scope of the present invention.

Additionally, the invention can comprise the step of determining antenna weights used at base station 12 for transmitting data to each of the selected users 111, ..., 113.

In a preferred embodiment of the present invention, when all users have been selected for transmission, their antenna weights can be optimised to avoid causing mutual interference on each other. If this step is skipped, the conjugate principal component antenna weights **v**_{*u,*Max}^{H} should be used as a single user adaptive beamforming algorithm.

Multi user beamforming with interference suppression will give the extra benefit of a higher supportable code rate and/or modulation order and thus will improve cell throughput.

One possible option is to use a spatial transmit zero forcing filter (ZF) which will give as antenna weights: **w***ᵤ* = (Σ_{*k*≠*u*} **R***ₖ*)⁻¹ **v**_{*u,*Max}^{H} which is the principal component weight vector of user u, multiplied by an inverted sum of all interfering covariance matrices.

For low SNR a spatial transmit MMSE filter performs better, but needs some information on the noise variance σ (which could also be replaced by an approximated constant which is suitable for a certain SNR operating point.)

This MMSE filter gives the antenna weights: **w**ᵤ = (σ**I** + Σ_{*u*≠k} **R***ᵤ*)⁻¹ **v**_{u,Max}^{H} with I being the identity matrix.

With the above selected weights, the data of the users can be transmit simultaneously over the radio channel. Only simple mobile receivers are needed as the intra-cell interference is kept low due to the above described methods for SDMA beamforming.

## Claims

1. Method for determining a set of users (111, ..., 113) able to be scheduled on an identical basic resource unit in a base station (12) of a SDMA capable multiple access radio communication system, said method comprising the steps of:
- Attributing to each user (111, ..., 113) a scheduling criterion value (132)
- Selecting the user having the highest scheduling criterion value
- Checking for additional users spatially separable (131) from said selected user,
- Selecting the user having the highest scheduling criterion value among said additional users.

2. Method according to claim 1, further comprising the step of determining antenna weights used at said base station for transmitting data to each of said selected users.

3. Method according to claim 1, further comprising the step of obtaining information on the transmit covariance matrix (131) of said selected user at said base station, and determining said users spatially separable from said selected user using said information on the transmit covariance matrix.

4. Method according to claim 3, further comprising the step of sending from said selected user (111, ..., 113) to said base station (12) said transmit covariance matrix (131) using uplink feedback signalling.

5. Method according to claim 3, further comprising the step of calculating said transmit covariance matrix (131) at said base station (12).

6. Method according to claim 1, further comprising the step of performing additional interference suppression at the selected simultaneously transmitting users.

7. Method according to claim 6, wherein said additional interference suppression is performed by using a zero forcing filter.

8. Method according to claim 6, wherein said additional interference suppression is performed by using a MMSE filter.

9. Base station (12) of a SDMA capable multiple access radio communication system comprising means for:
- Attributing to each user (111, ..., 113) a scheduling criterion value (132),
- Selecting the user having the highest scheduling criterion value (132),
- Checking for additional users spatially separable (131) from said selected user,
- Selecting the user having the highest scheduling criterion value (132) among said additional users.
